# FASCICULE DE BREVET EUROPEEN

(11) **EP 1 725 114 B1**
(45) Date de publication et mention de la délivrance du brevet: **08.07.2009**
(21) Numéro de dépôt: 05739566.7
(22) Date de dépôt: 16.03.2005
(51) Int. Cl.: A21D 2/04, A21D 8/02, A21C 1/10

(54) **UTILISATION DE L'OZONE POUR L'AMELIORATION DU PETRISSAGE**
VERWENDUNG VON OZON ZUR VERBESSERUNG DES KNETVORGANGS
USE OF OZONE FOR IMPROVING KNEADING

(30) Priorité: 19.03.2004 FR 0402846
(43) Date de publication de la demande: 29.11.2006
(73) Titulaire: Green Technologies Sarl, 35400 Saint Malo (FR)
(72) Inventeur: COSTE, Christian, F-84870 LORIOL DU COMTAT (FR); DUBOIS, Michel, F-78530 BUC (FR)
(74) Mandataire: Hart-Davis, Jason
(86) Numéro de dépôt international: PCT/FR2005/000628
(87) Numéro de publication internationale: WO 2005/099457

(56) Documents cités:
- WO-A-01/43556
- WO-A-93/17561
- DE-A- 19 624 229
- FR-A- 2 831 023
- GB-A- 186 940
- GB-A- 880 182
- US-A- 5 089 283
- US-A1- 2004 022 917
- DATABASE WPI Derwent Publications Ltd., London, GB; AN 1991-269663 XP002304447 & JP 03 175941 A (FUJI SEIMEN KK) 31 juillet 1991 (1991-07-31) cité dans la demande
- DATABASE WPI Derwent Publications Ltd., London, GB; AN 2001-395703 XP002304446 & RU 2 166 852 C (OOO RJUT AR) 20 mai 2001 (2001-05-20) cité dans la demande

## Description

La présente invention a pour objet un nouveau procédé de pétrissage de pâtes à base de farine de blé tendre, réalisé en présence d'ozone. La pâte ainsi fabriquée peut être utilisée pour la fabrication de produits finis céréaliers de cuisson tels que des pains ou des produits apparentés (pâte à pizza levée par exemple).

La présente invention a également pour objet de nouveaux dispositifs de pétrissage adaptés au pétrissage en présence d'ozone.

### Arrière-plan technologique

Le pétrissage est une opération qui consiste à mélanger intimement de la farine, de l'eau, une certaine quantité de chlorure de sodium et de levain (ou d e levure) en présence d'air. On peut considérer le pétrissage comme une opération classique de génie chimique qui permet à partir de trois constituants de base (farine, eau et air) de former une pâte homogène, lisse, tenace et présentant des propriétés visco-élastiques. De la bonne conduite de cette opération dépend e n grande partie la qualité des produits finis (produits de cuisson).

On entend par « farine », un produit obtenu par broyage fin de granules d e variétés de blé tendre. La taille moyenne des particules de farine est de 50 à 60 µm, la taille minimale étant d'environ 6 µm et la taille maximale d'environ 220 µm.

En revanche, la « semoule », obtenue à partir de la mouture du blé dur, présente une granulométrie distincte de celle de la farine, à savoir une taille moyenne des particules d'environ 600 µm, une taille minimale d'environ 300 µm et une taille maximale d'environ 900 µm.

Dans le cadre du pétrissage industriel ou semi-industriel, des dizaines voir des centaines de kilogrammes de constituants de base peuvent être pétries lors d'une opération de pétrissage, avec une quantité de pâte produite par heure qui dépasse généralement 100 kg par heure et peut dépasser 1000 kg par heure avec des dispositifs de pétrissage (pétrins) rapides. Les pétrins utilisés pour de telles opérations de pétrissage comprennent une cuve de pétrissage (ou « corps de pétrin »), un dispositif d'entraînement et des « frasers ». Le « fraser » est le terme générique pour désigner en technologie de panification le mobile d'agitation mécanique du pétrin. Un fraser peut être défini comme un mobile spécifique d'agitation capable tout à la fois d'assurer un mélange, de transmettre de l'énergie mécanique au milieu viscoélastique en cours de formation, et d'assurer la trituration de ce milieu viscoélastique.

Lorsque la pâte est constituée, les deux composants principaux de la farine, que sont l'amidon et le gluten, occupent respectivement 60 et 30 % du volume total de la pâte, cependant que la fraction d'air introduite durant la phase de pétrissage correspond à environ 10% de ce même volume total.

Au cours de l'opération de pétrissage, les constituants (eau+farine+levure+sel de mer) sont intimement mélangés en présence d'une atmosphère oxydante (l'air environnant). L'introduction de l'air environnant s'effectue dans la pâte en cours de pétrissage par l'application à cette dernière de contraintes mécaniques multiples de type mélange, agitation, brassage, cisaillement. Ces contraintes mécaniques ont pour effet global de renouveler de façon permanente l'interface entre la pâte en cours de formation et l'air environnant et, par ce biais, d'assurer le transfert de l'oxygène et de l'azote de l'air vers le milieu visco-élastique en cours de formation. Elles ont un double but :
- celui d'obtenir une structure homogène, à la consistance et aux propriétés particulières (propriétés visco-élastiques) ;
- celui d'introduire en mélange intime l'air contenant l'oxygène nécessaire à l'accomplissement de l'ensemble des phases oxydatives.

L'oxygène, présent dans le gaz incorporé lors de la phase de pétrissage, agit suivant au moins deux voies privilégiées qui sont :
- l'action directe sur les fractions protéiques (modification des échanges qui se produisent au sein de la pâte entre les groupements disulfures des protéines de faible et de haut poids moléculaire) ;
- l'utilisation de ce gaz (l'oxygène) par les enzymes oxydantes, notamment : peroxydase, catalase, lipoxygénase. Par cette voie, les petites protéines solubles riches en cystéines sont rapidement oxydées. Les protéines de poids moléculaire plus élevé, peuvent ensuite réagir, ce qui a pour conséquence d'accroître la « force » de la pâte.

En parallèle, l'oxydation des groupements thiols des protéines entraîne une modification des propriétés rhéologiques des pâtes. Les transformations rhéologiques observées sont bénéfiques. Elles peuvent se traduire par une amélioration de la tolérance au pétrissage et un temps de relaxation plus long, et donc, en final, par une augmentation du volume du pain. Ces modifications sont particulièrement importantes en pétrissage intensifié, dont l'effet le plus visible est le blanchiment poussé de la mie et l'accroissement du volume du pain.

Il est important de noter que l'oxydation des protéines du gluten, ainsi que les autres effets bénéfiques induits par l'oxygène au cours du pétrissage, réclame un renouvellement fréquent des contacts entre les enzymes et les substrats et un apport important d'énergie.

Une solution possible pour faciliter l'action de l'oxygène est d'augmenter la vitesse absolue de renouvellement de l'interface, et donc d'augmenter la vitesse de rotation du ou des fraser(s), et de transmettre simultanément une énergie mécanique supérieure. Cette solution utilisée classiquement présente néanmoins des inconvénients et en particulier celui du risque d'un collage final de la pâte par sur-application d'énergie.

Il est donc difficile dans le cadre de méthodes classiques de pétrissage de maîtriser l'apport d'oxygène dans la pâte par le biais de méthodes mécaniques d'agitation, de façon à obtenir les effets bénéfiques de l'oxygène tout en évitant les inconvénients à la fois en termes de dépense d'énergie et en termes de problèmes intrinsèques de procédé (collage de la pâte).

La difficulté de maîtriser l'apport et les effets de l'oxygène est d'ailleurs accentuée lorsque l'on utilise les techniques nouvelles et rapides de pétrissage du type « Chorleywood process », et procédés similaires développés dans les pays Anglo-Saxons. Le pétrissage en continu, et de courte durée, ne fait qu'accentuer la difficulté à maîtriser le transfert gazeux indépendamment de l'aspect mécanique.

En même temps, un certain nombre de caractéristiques particulières de pâtes fabriquées sont extrêmement intéressantes et très recherchées par les industriels de la panification. Parmi elles, nous pouvons citer: une bonne rétention gazeuse de la pâte, une bonne mouillabilité de la pâte (vitesse de fixation de l'eau), une bonne machinabilité de la pâte (division, façonnage, tolérance), un volume accru du «pâton» lors de la fermentation ainsi que dans le four de cuisson, une diminution des risques de contamination microbiologique. Sur le plan de la gestion industrielle de la ligne de production des pâtes, on recherche entre autres une simplification et un paramétrage accru du pétrissage ainsi qu'une moindre variabilité des caractéristiques des produits au sortir du pétrissage.

La demande de brevet US 2004/0022917 décrit une technologie permettant un temps de mélange des constituants de la pâte (farine, eau etc.) inférieur à 10 secondes. Ce document enseigne l'injection d'eau à haute pression (30 à 100 bars) comme moyen permettant d'assurer le mélange des constituants de la pâte en remplacement de moyens mécaniques traditionnels tels que les agitateurs à spirales, vis de mélange et crochets de pétrin. Bien que mentionnant l'utilisation d'ozone comme aide potentielle à l'oxydation dans le cadre de la technologie qui y est décrite, US 2004/0022917 n'enseigne pas le pétrissage assuré par des mobiles mécaniques d'agitation (« frasers ») en présence d'ozone.

La demande de brevet RU 2 166 852 décrit une méthode de pétrissage de la pâte par mélange de la farine, de l'eau traitée, du sel et de la levure dans laquelle, préalablement au mélange, l'ozone est ajouté à l'eau afin d'enlever des contaminants. Ce document fait état de ce que certaines impuretés dans l'eau de mouillage ralentissent le développement des levures; de surcroît, certaines impuretés donnent lieu intrinsèquement à une odeur désagréable. A la sortie de l'unité d'épuration fine décrite dans RU 2 166 852, l'eau qui va servir comme eau de mouillage ne contient plus du tout d'ozone. Il est d'ailleurs expliqué que l'utilisation d'un excès d'ozone peut avoir des effets indésirables sur les propriétés organoleptiques de la pâte obtenue. La quantité d'ozone utilisée est calculée et limitée uniquement en fonction de la quantité d'impuretés à détruire dans l'eau, et RU 2 166 852 ne décrit donc pas un procédé de pétrissage en présence d'eau ozonée.

La demande de brevet JP-3-175941 décrit une méthode de préparation de pâte à nouilles. Le but principal recherché dans cette demande de brevet est la réduction de la quantité de chlorure de sodium utilisé dans la fabrication de nouilles, en raison de la tendance de ce dernier à provoquer l'apparition de maladies du système circulatoire. La solution proposée dans le document est d'utiliser le petit lait (fraction séparée du lait caillé dans la fabrication du fromage), car le petit lait contient divers sels minéraux et peut servir dans la fabrication de nouilles, réduisant la quantité de NaCl. Dans le cadre de ce procédé, le petit lait peut conférer une odeur de fromage aux nouilles produites, et afin d'éliminer cette odeur particulière inacceptable dans les nouilles, le traitement à l'ozone d'une solution de sels minéraux du petit lait est préconisé. Le passage d'ozone a lieu à pH basique, dans la présence de matière organique réagissant avec l'ozone et dans une solution saline. Ces facteurs favorisent tous la réaction ou décomposition de l'ozone, et par conséquent, au moment du pétrissage, il n'existe plus d'ozone en solution. Comme dans le cas de RU 2 166 852, dans les conditions de mise en oeuvre de ce procédé, il ne reste plus aucune trace d'ozone au moment du contact avec la farine - il ne s'agit ni dans un cas ni dans l'autre d'une opération de pétrissage au moyen d'eau ozonée. Dans les deux cas, le seul rôle attribué à l'ozone est celui de la décontamination / désodorisation. On peut en outre observer que la demande de brevet JP-3-175941 concerne spécifiquement un procédé de production de nouilles (japonaises), qui sont fabriquées à partir de blé dur, non pas un procédé de fabrication de pâte pour panification ultérieure à partir de blé tendre.

La demande de brevet GB 186 940 décrit l'utilisation, en tant qu'additifs dans la meunerie, de composés organiques (peraldéhydes, (per)ozonides etc.) obtenus par réaction de l'ozone sur des molécules précurseurs. L'introduction de l'ozone lui-même au cours du pétrissage n'est ni décrit ni suggéré par ce document.

Les documents FR 2 831 023, GB 880 182, DE 1 96 24229 et US 5 089 283 concernent les détails mécaniques des pétrins et des procédés de pétrissage les utilisant. Ces documents décrivent en particulier des méthodes pour maîtriser l'apport d'oxygène dans la pâte. En revanche, aucun de ces documents ne décrit ni suggère l'utilisation de l'ozone au cours d'une opération de pétrissage.

La demande internationale WO 01 43556 concerne un procédé de fabrication de farines présentant un haut niveau de sécurité alimentaire comprenant le broyage de grains préalablement nettoyés et humidifiés, caractérisé en ce que, préalablement ou simultanément audit broyage, on met lesdits grains en contact avec de l'ozone. Dans cette méthode, l'ozone est donc appliqué aux grains préalablement ou simultanément à leur broyage, non à la farine. WO 01 43556 décrit donc une façon de préparer la farine (qui servira ultérieurement dans une opération de pétrissage), et non un procédé de pétrissage utilisant la farine déjà broyée.

### Résumé de l'invention

La Demanderesse a maintenant découvert qu'il est possible de résoudre les problèmes indiqués plus haut par un procédé de pétrissage tel que décrit dans la revendication 1.

Dans un mode de réalisation préféré de l'invention, l'agitation qui permet de mélanger les constituants de la pâte (eau, farine ...) est assurée uniquement au moyen d'au moins un mobile d'agitation mécanique (« fraser ») et à l'exclusion de systèmes de mélange par injection d'eau à haute pression.

L'ozone, qui peut être produit de façon classique à partir de l'oxygène dans un ozoneur, peut être amené dans la pâte de deux manières :
- l'eau de mouillage ajoutée à la pâte peut être préalablement ozonée ;
- l'ozone peut être aussi apporté dans le ciel gazeux du pétrin, c'est-à-dire l'atmosphère gazeuse au contact des phases solides et liquides de la pâte en cours de préparation.

Il est possible, et avantageux, d'apporter l'ozone par chacune de ces voies utilisées séparément ou en combinaison. De plus, comme il sera détaillé par la suite, l'ozone peut être apporté de façon ponctuelle, de façon séquencée, de façon continue, ou par l'utilisation en séquences enchaînées d'ozone apporté par voie liquide ou par voie gazeuse.

Selon un autre aspect de l'invention, la demanderesse a réalisé des adaptations de pétrins connus de l'homme du métier afin de permettre le pétrissage en présence d'ozone. Des dispositifs de pétrissage « classiques », à vitesse d'agitation limitée, ont notamment été adaptés pour permettre le pétrissage en présence d'ozone, ainsi que des dispositifs de pétrissage continu rapide, à vitesse d'agitation élevée.

Parmi les avantages que procure le procédé de pétrissage selon l'invention par rapport aux procédés classique de pétrissage, nous pouvons citer :
- une réduction du temps de pétrissage pour une vitesse d'agitation donnée, ou de la vitesse d'agitation pour un temps donné. Dans les deux cas, l'énergie dépensée lors du pétrissage est réduite ;
- une structure du réseau glutinique améliorée malgré l'utilisation d'une énergie mécanique inférieure ;
- une amélioration des propriétés de production et de rétention de CO₂ lors de la fermentation de la pâte ;
- une meilleure mouillabilité de la pâte ;
- une meilleure « machinabilité » de la pâte, c'est-à-dire une meilleure aptitude à être correctement façonnée ou travaillée ;
- une qualité microbiologique accrue ;

L'utilisation de l'ozone permet en outre de répondre à un certain nombre d'exigences en rapport avec la gestion industrielle de la production de la pâte, et notamment :
- diminution du risque de collage de la pâte ;
- simplification et paramétrage accru du pétrissage ;
- moindre variabilité des caractéristiques des produits au sortir du pétrissage.

### Brève description des figures

La Figure 1 montre schématiquement un dispositif de pétrissage « classique », à vitesse d'agitation peu élevée, sans adaptation à l'utilisation de l'ozone lors du pétrissage.
La Figure 2 montre schématiquement un exemple de dispositif de pétrissage « classique », à vitesse d'agitation peu élevée, comportant des adaptations pour l'utilisation de l'ozone lors du pétrissage, conformément à la présente invention.
La Figure 3 montre schématiquement un dispositif de pétrissage « continu » (pour pétrissage rapide), à vitesse d'agitation élevée, sans adaptation à l'utilisation de l'ozone lors du pétrissage.
La Figure 4 montre schématiquement un exemple de dispositif de pétrissage « continu » (pour pétrissage rapide), à vitesse d'agitation élevée, comportant des adaptations pour l'utilisation de l'ozone lors du pétrissage, conformément à la présente invention.
La Figure 5 est une courbe qui montre l'amélioration des propriétés de production et de rétention gazeuses des pâtes traitées à l'ozone conformément à la présente invention, en comparaison avec des pâtes non traitées à l'ozone, mesurées par rhéofermentomètre.
La Figure 6 est u ne courbe qui montre l'amélioration des propriétés de machinabilité et de tolérance des pâtes traitées à l'ozone conformément à la présente invention, en comparaison avec des pâtes non traitées à l'ozone, mesurées par consistographe.

### Description détaillée de l'invention

Comme il a été dit plus haut, le pétrissage est une opération qui consiste à mélanger intimement de la farine, de l'eau, une certaine quantité de chlorure de sodium et de levain (ou de levure) en présence d'air.

Lors d'une opération classique de pétrissage, une quantité d'eau comprise entre 50 et 65 kg est introduite pour 100 kg de farine de départ. De manière habituelle, la farine de départ présente une teneur en eau de 8 à 14%. La quantité d'eau finale totale par rapport à la matière sèche de la farine est donc généralement comprise entre 60 et 85%, et le plus souvent entre 65% et 75%, car les farines naturellement les plus humides reçoivent moins d'eau ajoutée.

Dans le cadre de la présente invention, la quantité d'eau finale totale par rapport à la matière sèche de la farine, tenant compte de l'humidité initiale de la farine, sera de préférence comprise entre au moins 60 % et au plus 75 %.

La quantité de sel de mer est généralement de l'ordre de 2% en poids, soit 2 kg de NaCl pour 100 kg de farine. Il est à noter que le sel joue un rôle organoleptique, mais influe également sur les propriétés technologiques des produits finis. D'autres sels peuvent être rajoutés, mais il s'agit dans ce cas d'additifs spéciaux.

On utilise également en général de la levure fraîche dans une quantité d'environ 2% en poids par rapport à la farine, soit 2 kg pour 100 kg de farine.

Le pétrissage est généralement réalisé à température ambiante. Bien qu'il puisse être réalisé à d'autres températures, on observe généralement peu d'effets liés à une modification de la température. Dans le cadre du pétrissage réalisé en présence d'ozone selon la présente invention, aucun effet lié à une modification de la température n'a été observé.

L'ozone nécessaire à la réalisation de la présente invention est typiquement fabriquée par le passage d'un gaz vecteur à travers un générateur d'ozone (ozoneur). Le gaz vecteur doit obligatoirement contenir une fraction d'oxygène suffisante pour permettre la fabrication d'ozone dans des conditions énergétiques et économiques acceptables. Il peut être indifféremment utilisé de l'air, de l'oxygène pur, ou un mélange en proportions variables de ces deux gaz. Par passage dans l'ozoneur, la fraction d'oxygène contenue dans ce gaz vecteur est transformée, au moins partiellement, en ozone.

La demanderesse a observé que les concentrations appropriées d'ozone dans le gaz vecteur et ce, quelque soit la nature de ce gaz, sont habituellement avantageusement choisies entre 5 g d'O³/m³ tpn et 250 g d'O³/m³ tpn , plus préférentiellement entre 15 g d'O³/m³ tpn et 150 g d'O³/m³ tpn. Ces valeurs de concentration d'ozone dans le gaz vecteur sont données à titre indicatif et non limitatif, notamment au vu de la diversité de manières dont l'ozone peut être introduit dans la pâte, comme nous le verrons par la suite.

Une partie au moins de l'ozone est apportée sous forme dissoute dans l'eau de mouillage, cette dernière doit alors être préalablement ozonée, voir hyper-ozonée.

La concentration en ozone de l'eau ozonée et de l'eau hyper-ozonée que l'on choisira dans le cadre de la présente invention peut varier notamment en fonction du type de pétrin, du volume de pâte en cours de pétrissage ainsi que des caractéristiques du produit fini à obtenir. Généralement, et pour être en accord avec les quantités d'eau à introduire par masse de pâte, la concentration d'ozone dans l'eau, exprimée en milligrammes d'ozone par litre d'eau, sera comprise entre 20 mg/l et 100 mg/l, et de préférence entre 40 mg/l et 80 mg/l. Ces valeurs ne dépendent pas de la température exacte de l'eau dans laquelle l'ozone a été dissout.

La préparation d'eau ozonée ou d'eau hyper-ozonée nécessite l'utilisation d'un dispositif capable de fonctionner sous très légère pression (1,5 bars absol us) ou sous plus forte pression (jusqu'à 2,2 bars absolus). Par l'utilisation de dispositifs spéciaux connus de l'homme de l'art, il est possible de dissoudre l'ozone dans l'eau à des pressions supérieures, mais, généralement, au prix d'une légère perte en ozone susceptible de diminuer légèrement le rendement global de l'opération.

A titre d'exemple non limitatif, l'eau ozonée ou hyper-ozonée peut être fabriquée à l'aide des dispositifs dont la description suit.

Dans le cas de préparation d'eau ozonée, il pourra être utilisé tout type de réacteur de dissolution comportant des dispositifs de bullage par diffuseur poreux, assorti d'une hauteur liquide suffisante pour assurer le transfert de l'ozone gazeux en phase liquide (pression d'application).

La dissolution de l'ozone dans un réacteur soumis à une simple charge liquide limite la quantité d'ozone dissous (la charge liquide est limitée par la hauteur du réacteur). Ce dispositif de dissolution d'ozone pourra être utilisé pour apporter de faibles quantités d'ozone au pétrin et par voie de conséquence de faibles quantités d'ozone véhiculées par l'eau de mouillage.

Dans le cas où la quantité d'ozone à utiliser est plus importante, et doit être introduite dans un temps relativement court, à l'intérieur du pétrin, il est nécessaire de faire appel à la technique dite de l'eau hyper-ozonée. Pour ce faire, on peut mettre en oeuvre un dispositif de caractéristiques géométriquement acceptables, et capable de dissoudre sous pression les quantités d'ozone nécessaires à la phase de pétrissage.

Le premier dispositif que pourra utiliser l'homme de l'art est constitué par un réacteur d'ozonation à dispositif de disque poreux dont le ciel gazeux est maintenu sous pression. La pression supplémentaire exercée sur la colonne d'eau contenue dans le réacteur augmente de façon substantielle la pression d'application de l'ozone, et, par voie de conséquence la pression motrice de dissolution (pression motrice de transfert).

La seconde solution pour préparer de l'eau hyper-ozonée consiste à utiliser un dispositif statique mono- ou multi-étagé de type hydro-éjecteur, permettant d'introduire un volume gazeux conséquent sous une pression d'application modérée. Ce type de dispositif permet des taux de dissolution élevés et permet d'apporter, à la pâte en cours de formation, les quantités d'ozone requises dans un faible volume d'eau.

Ces dispositifs sont applicables quelque soit la nature du gaz vecteur supportant l'ozone, air, oxygène, mélange en proportion variable des deux gaz.

L'homme de l'art sera capable de déterminer, en fonction des quantités d'ozone à introduire, le nombre d'étages ainsi que les dimensions des hydro-éjecteurs à mettre en oeuvre.

D'autres dispositifs peuvent être utilisés pour produire de l'eau hyper-ozonée. Il s'agit de dispositifs mettant en oeuvre une compression du gaz ozoné, avant son introduction en phase liquide ou de dispositifs permettant de façon simultanée, de comprimer l'ozone et de dissoudre ce dernier en phase liquide. Parmi ce type d'appareillage, il est possible d'utiliser des surpresseurs à anneaux liquides ou des machines de type similaire. Comme exemples de machines de taille compatible avec les procédés de la présente invention, nous pouvons citer les modèles commercialisés par les sociétés SIHI et Allimand. L'utilisation de tels types de machines dégrade légèrement le rendement énergétique de l'opération puisque de telles machines ont une consommation énergétique supplémentaire non négligeable.

Une deuxième voie éventuelle d'introduction d'ozone dans la pâte consiste en l'introduction de gaz vecteur contenant de l'ozone dans le ciel gazeux du pétrin. Il peut s'agir d'une introduction d'ozone en une fois (par exemple si le pétrin, en fait le « réacteur », est ensuite fermé), ou bien d'un passage en continu de gaz vecteur à travers le pétrin.

Comme il a été dit plus haut, l'ozone est apporté au moins en partie par le biais de l'eau de mouillage rajouté à la farine et il peut également être apporté par l'incorporation de l'ozone contenu dans le gaz vecteur dans le ciel gazeux du pétrin. L'ozone peut être apporté de façon ponctuelle, de façon séquencée, de façon continue, ou par l'utilisation en séquences enchaînées d'ozone apporté par voie liquide ou par voie gazeuse.

De préférence, le premier apport d'ozone doit est effectué à l'aide d'un support eau, car la formation de la pâte comprend une première phase d'hydratation de la farine. Une fois que la pâte est constituée, et que les premières réactions d'oxydation surviennent, le second apport d'ozone peut ensuite avantageusement être réalisé par le biais d'un support gazeux (c'est-à-dire par incorporation de l'ozone dans le ciel gazeux du pétrin). A cet instant, le pétrissage s'effectue sous atmosphère d'ozone, et le transfert s'opè re dans la structure visco-élastique que constitue la pâte. Une hydratation supplémentaire, en cours de pétrissage, peut s'avérer utile pour apporter une quantité d'ozone complémentaire.

Durant la phase de mouillage, on peut introduire simultanément une fraction d'ozone par voie aqueuse et une fraction d'ozone par voie gazeuse, tandis que durant la phase de pétrissage, on peut introduire de façon continue l'ozone par voie gazeuse. Il peut être également envisagé d'introduire l'ozone par voie aqueuse et par voie gazeuse en séquences courtes enchaînées durant la première partie du pétrissage. La technique d'introduction de l'ozone sera choisie en fonction des caractéristiques du matériel de pétrissage utilisé et surtout en fonction des caractéristiques souhaitées des produits finis (produits de cuisson) à obtenir.

Le procédé de la présente invention peut être réalisé à l'aide d'un dispositif de pétrissage (pétrin) clos et capable de travailler sous lég ère pression, voire sous pression. On peut noter qu'il existe sur le marché aujourd'hui certains types de pétrins fonctionnant dans une première phase sous léger vide (première phase du pétrissage), puis dans une seconde phase sous légère pression ou le cas échéant à la pression atmosphérique. Ce type de pétrin peut également être utilisé dans le cadre de l'invention mise au point par la demanderesse, puisque l'ozone sous forme gazeuse ou l'eau ozonée d'appoint peuvent être introduits durant la deuxième phase du pétrissage soit sous légère pression, soit sous pression atmosphérique ou pression supérieure, pour la forme gazeuse, ou durant la première et/ou la deuxième phase pour l'eau ozonée.

Dans le cadre de la présente invention, lors de l'introduction d'ozone, la pression qui règne dans la phase gazeuse du pétrin sera comprise entre au moins 1,1 bars absolus et au plus 1,6 bars absolus. Plus préférentiellement, la pression dans la phase gazeuse sera comprise entre au moins 1,3 bars absolus et au plus 1,5 bars absolus, la valeur la plus préférée étant d'environ 1,4 bars absolus. Concernant la pression de l'eau de mouillage (qui peut être ozonée), la pression sera de préférence comprise entre au moins 0,5 bars absolus et au plus 2,2 bars absolus, et plus préférentiellement entre au moins 1,7 bars absolus et au plus 1,9 bars absolus, la valeur la plus préférée étant d'environ 1,8 bars absolus.

L'utilisation de l'ozone supporté par l'eau utilisée pour le mouillage de la farine, et éventuellement par un gaz vecteur, susceptible d'être introduit dans un dispositif de pétrissage, n'est pas limitée à l'utilisation de matériel classique de pétrissage. L'invention de la demanderesse peut être appliquée à tout dispositif moderne et rapide de pétrissage dans la mesure où celui-ci est susceptible d'être rendu en partie étanche. Il s'agit, par exemple, des dispositifs de type « Chorleywood process », des procédés continus Amflow® et Do-Maker®, et de tout autre procédé qui permet des pétrissages rapides, voire très rapides (400 tours par minute), en temps limité.

Toutefois, dans le cadre de la présente invention, l'agitation qui permet de mélanger les constituants de la pâte (eau, farine ...) sera d e préférence assurée uniquement au moyen d'au moins un mobile d'agitation mécanique (« fraser ») et à l'exclusion de systèmes de mélanges par injection d'eau à haute pression.

En matière de pétrins, il est possible de répartir les pétrins connus en deux catégories. D'une part, il existe des pétrins dits « classiques » ou « discontinus », où la vitesse de rotations des frasers est peu élevée (anormalement de 40 à 80 tpm, bien que certains modèles peuvent atteindre jusqu'à 200 tpm)- D'autre part, il existe des pétrins dits « continus » ou « à pétrissage rapide », dans lesquels la vitesse de rotation des frasers est importante, se situant généralement au dessus de 100 tpm et pouvant atteindre 600 tpm.

Concernant les pétrins « classiques », les frasers peuvent être à axe oblique, au quel cas la rotation de la cuve du pétrin peut être soit libre soit motorisée. Il est également possible d'utiliser des frasers en forme de spirale verticale, au quel cas la rotation de la cuve du pétrin est généralement motorisée. Nous pouvons également noter que l'axe de symétrie de la cuve est normalement vertical pour des pétrins « classiques» ; il existe néanmoins quelques rares modèles de pétrins discontinus horizontaux.

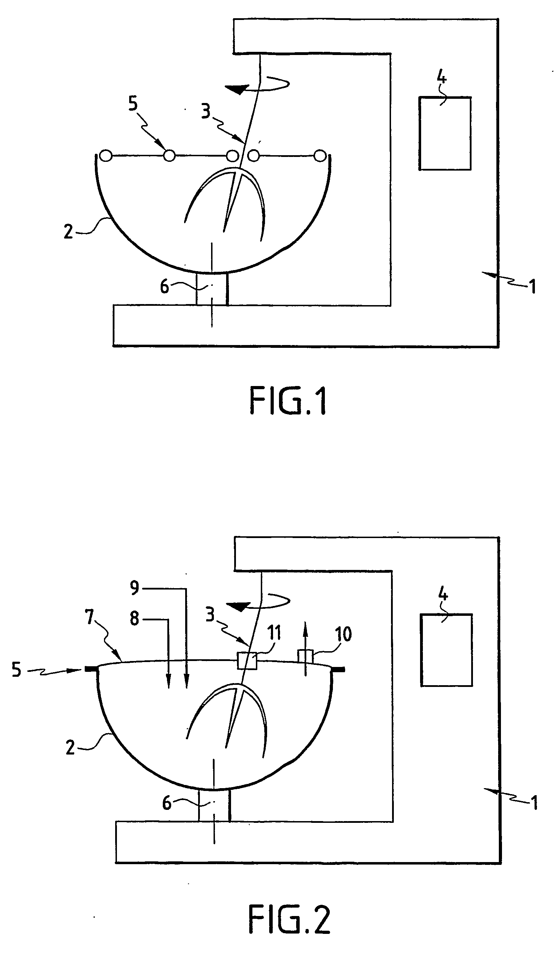

Un exemple d'un pétrin classique est représenté schématiquement à la Figure 1.

Dans ce pétrin classique, un bâti (1), généralement réalisé en fonte ou en structure mécano-soudé, supporte le dispositif mécanique d'entraînement (moteur, régulateur de vitesse, train d'engrenage) ainsi que la cuve de pétrissage (2), qui est généralement realisée en acier inoxydable. En fonctionnement, la cuve (2) est en rotation lente, ou en rotation libre grâce à un dispositif d'entraînement ou dispositif support (6).

A l'intérieur de la cuve (2), un fraser (3), destiné à assurer le mélange et l'application de contraintes mécaniques, est entraîné avec un mouvement de rotation dont la vitesse se situe entre 40 et 80 tpm. Comme indiqué plus haut, les frasers peuvent être de deux types, à savoir à axe oblique ou à axe vertical (généralement en spirale).

Le haut de la cuve de pétrissage peut être fermé par un dispositif de sécurité (5), ou par un couvercle étanche assurant un système clos avec la cuve de pétrissage. Sur le bâti (1) se trouve le panneau de dispositif de commande et de réglage (4).

Dans le cadre de l'utilisation d'un tel pétrin classique, avant l'opération de pétrissage proprement dit, la farine, l'eau, le sel de mer (chlorure de sodium), puis la levure, sont disposés dans la cuve, préalablement à leur mélange.

Dans le cadre de la présente invention, la Demanderesse a conduit des études afin de déterminer comment réaliser le pétrissage en présence d'ozone, aussi bien en ce qui concerne le pétrissage classique que le pétrissage rapide.

Un exemple de l'adaptation d'un pétrin classique à l'utilisation de l'ozone selon l'invention est représenté schématiquement à la Figure 2.

Les éléments (1) à (6) du pétrin gardent la même signification que pour le pétrin classique non adapté décrit plus haut en référence à la Figure 1, étant cependant entendu que l'élément (5) constitue un dispositif d'étanchéité.

Selon l'invention, ce dispositif est complété par un couvercle étanche (7), une arrivée d'eau ozonée ou hyper-ozonée (9), et éventuellement une arrivée d'ozone gazeux (8) une purge (10) et un passage étanche (11) autour du fraser (3). De préférence, le passage étanche (11) est constitué d'un joint compressible permettant le passage étanche du fraser (3).

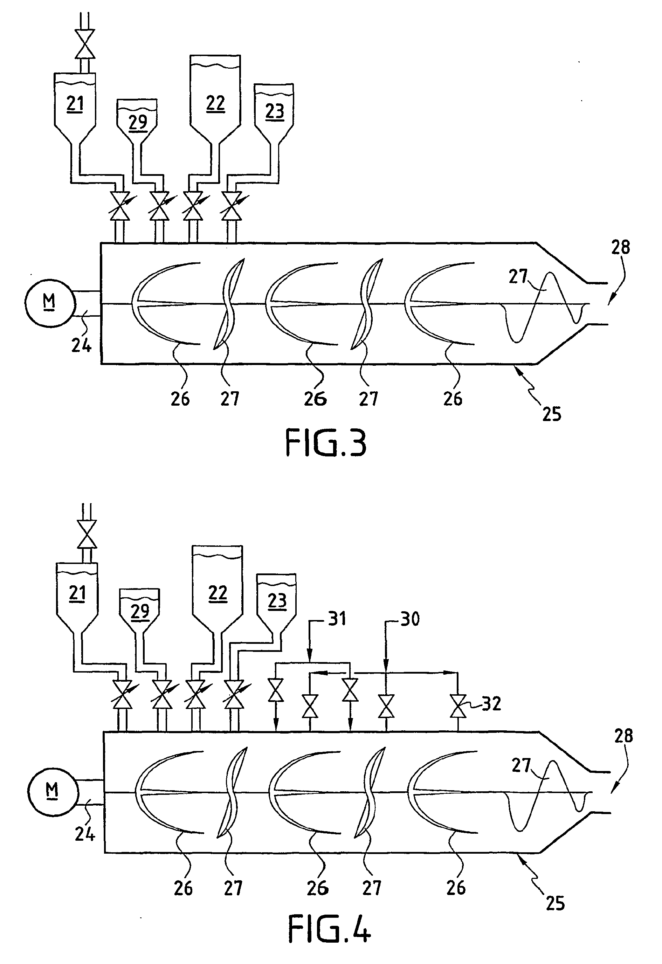

Concernant maintenant les dispositifs de pétrissage continu (pétrissage rapide), un exemple de pétrin continu non adapté à l'utilisation de l'ozone est représenté schématiquement à la Figure 3.

Les éléments clés constituant ce pétrin continu rapide sont les suivants :
- un stockage d'eau (21), contenant l'eau nécessaire au mouillage de la farine, relié au corps du pétrin par une tuyauterie munie d'une vanne de réglage ;
- un stockage de farine (22) permettant de stocker et de distribuer la farine dans le corps du pétrin. Ce stockage est également relié au corps du pétrin par une tuyauterie munie d'une vanne de réglage ;
- un stockage de levure (23) contenant la levure nécessaire à la fermentation de la pâte, également relié au corps du pétrin par une tuyauterie munie d'une vanne de réglage ;
- un stockage de sel de mer NaCl (29) contenant le sel nécessaire au pétrissage de la pâte, également relié au corps du pétrin par une tuyauterie munie d'une vanne de réglage ;
- un corps de pétrin (25), constitué par un dispositif cylindrique à axe horizontal, normalement réalisé en acier inoxydable, comportant à l'une de ses extrémités un dispositif cylindroconique munie d'une ouverture (28), généralement cylindrique, permettant la sortie de la pâte fa briquée. A l'autre extrémité se trouve le dispositif de motorisation et d'entraînement (24) permettant l'entraînement d'un axe central supportant les dispositifs de pétrissage (frasers (26)), ainsi que les dispositifs d'avancement de la pâte (27).

Durant la phase de pétrissage, la farine, l'eau de mouillage, le sel de mer et la levure, sont introduits en quantités prédéterminées dans la première zone du pétrin où le mélange est assuré ainsi que la première phase de travail. La pâte formée est reprise par les dispositifs d'avancement de la pâte (27), et poussée vers les autres zones de pétrissage comportant des frasers (26). En finale, la pâte prête à l'emploi est poussée à l'extérieur du corps du pétrin par un dispositif de vis conique. Généralement, les vannes de réglages situées entre les dispositifs de stockage et le corps du réacteur sont des vannes de réglage de type automatique commandées de façon séquencée.

Dans une variante d'exécution, un pétrin continu (pour pétrissage rapide) peut être constitué d'un corps cylindrique à axe horizontal comportant à sa périphérie intérieure un dispositif de vis d'Archimède permettant la progression de la pâte vers l'orifice de sortie. Les frasers demeurent calés sur l'axe d'entraînement horizontal mais, dans cette variante, la progression de la pâte est dissociée de l'opération de pétrissage proprement dit.

Un exemple de l'adaptation d'un pétrin continu (pour pétrissage rapide) à l'utilisation de l'ozone selon l'invention est représenté schématiquement à la Figure 4.

Les éléments (21) à (29) du pétrin gardent la même signification que pour le pétrin continu rapide décrit plus haut en référence à la Figure 3. Selon l'invention, ce dispositif est complété par une arrivée d'eau ozonée ou hyper-ozonée (31), et éventuellement par une arrivée d'ozone gazeux (30) et une vanne de réglage (32).

La demanderesse a observé que la quantité d'ozone introduit dans la pâte est un paramètre important caractérisant les procédés selon la présente invention.

Typiquement la quantité d'ozone introduit est mesurée et exprimée en grammes d'ozone introduits par heure par rapport à la quantité de pâte (en kilogrammes) produite par heure. On introduira entre 0.004 et 0.06 g d'ozone (O₃) par kg de pâte produite, étant entendu que cette mesure se rapporte à la masse de la pâte finie, après son mouillage lors du pétrissage. La quantité exacte d'ozone à introduire dépendra d'une part du type industriel de pétrissage et d'autre part des qualités précises recherchées pour une pâte donnée.

Le tableau 1 suivant matérialise les quantités d'ozone à introduire par unité de temps en fonction du procédé de pétrissage utilisé.

**Tableau 1 : quantité d'ozone à introduire par unité de temps en fonction du procédé**

| | **Unités** | **Pain de tradition industriel** | **Pain industriel classique** | **Pain américain industriel typique** |
|---|---|---|---|---|
| **Quantité de pâte produite** | kg / heure | 250 | 1000 | 6000 |
| **Quantité d'ozone moyenne à introduire dans la pâte** | g O₃ / heure | 1,2 - 12 | 5 - 60 | 30 - 200 |

Pour chacune de ces qualités de produits finis, il a été choisi des quantités de pâtes produites exprimées en kg par heure correspondant typiquement à des productions classiques des procédés industriels utilisés pour ce type de fabrication. Les quantités d'ozone indiquées peuvent être variables en fonction de la nature et de la qualité des farines, typiquement reliées à l'origine des blés. Par exemple, pour un pain de tradition industriel, pétri par un procédé semi-industriel classique, à une quantité horaire de pâte de 250 kg, il faudra utiliser entre 1,2 et 12 g d'ozone par heure en fonction des caractéristiques de la farine, du type de pétrin utilisé, et de la qualité finale du pain.

### Résultats

### Réduction de la dépense énergétique

La demanderesse a constaté que, par rapport à des procédés de pétrissage classiques, le pétrissage en présence d'ozone selon la présente invention permet de réduire la dépense en énergie.

D'une part, pour une même vitesse de pétrissage, on observe une accélération dans la vitesse de formation de la pâte. Par exemple, pour un type de pétrissage qualifié d' « amélioré », et pour une première vitesse de pétrissage de 40 tpm, le temps de pétrissage observé en technologie classique est compris entre 3 et 4 minutes. Ce même temps, tous paramètres étant égaux par ailleurs, est réduit à un temps compris entre 2 et 3 minutes, lorsque l'on pétrit en présence d'ozone. Le pétrissage de type amélioré comprend généralement une deuxième vitesse de pétrissage située aux environs de 80 tours par minute. Dans ces conditions opératoires, et en technologie classique, le temps de pétrissage est généralement compris entre 10 et 12 minutes. Il est réduit dans une fourchette comprise entre 7 et 9 minutes lorsque l'on pétrit en présence d'ozone. La demanderesse a observé que ces résultats se confirment pour des pétrissages de type « intensif » et « hyper-intensif » et que la réduction du temps de pétrissage pour des vitesses de pétrissage constantes est typiquement comprise entre 16% et 27% du temps de pétrissage initial (dans un procédé classique).

Bien que la durée exacte du pétrissage dépende fortement du type de pétrin utilisé, le temps de pétrissage, dans le cadre du pétrissage en présence d'ozone et au moyen d'au moins un mobile d'agitation mécanique (« fraser ») selon la présente invention, sera d'au moins 2 minutes.

D'autre part, si on fixe le temps de pétrissage ainsi que la qualité de la pâte obtenue, on observe que l'utilisation de l'ozone permet, pour un résultat semblable au niveau de la qualité de la pâte, de diminuer la vitesse de rotation des frasers ou des dispositifs de brassage. Par exemple, pour un pétrissage qualifié d'«amélioré», la vitesse classique de la deuxième phase de pétrissage est voisine de 80 tpm. Lorsque l'on utilise l'ozone lors du pétrissage, la vitesse de rotation des frasers, pour une même technique de pétrissage peut être diminuée substantiellement dans la fourchette 64 tpm à 67 tpm. De façon générale, on observe que les vitesses de rotation, pour un même temps de pétrissage, peuvent être diminuées à l'aide de l'ozone dans une fourchette comprise entre 18% et 27%.

Comme pourra aisément le constater l'homme de l'art, la diminution globale d'énergie consommée lors d'un pétrissage utilisant un apport d'ozone est typiquement comprise entre 15 % et 23% de l'énergie initiale, classiquement consommée.

### Etude par rhéofermentomètre

Pour étudier les effets de l'ozone sur la structure visco-élastique de la pâte et en particulier des constituants du réseau glutinique, la demanderesse a fait appel à la technique du rhéofermentomètre. Dans cette technique, on mesure le volume de gaz carbonique (CO₂) produit ainsi que le volume retenu par la pâte. La différence entre les deux, qui représente le volume de CO₂ libéré peut ainsi être déterminé. On considère en effet que cette méthode de mesure permet de se renseigner de manière indirecte sur le degré d'oxydation du réseau glutinique.

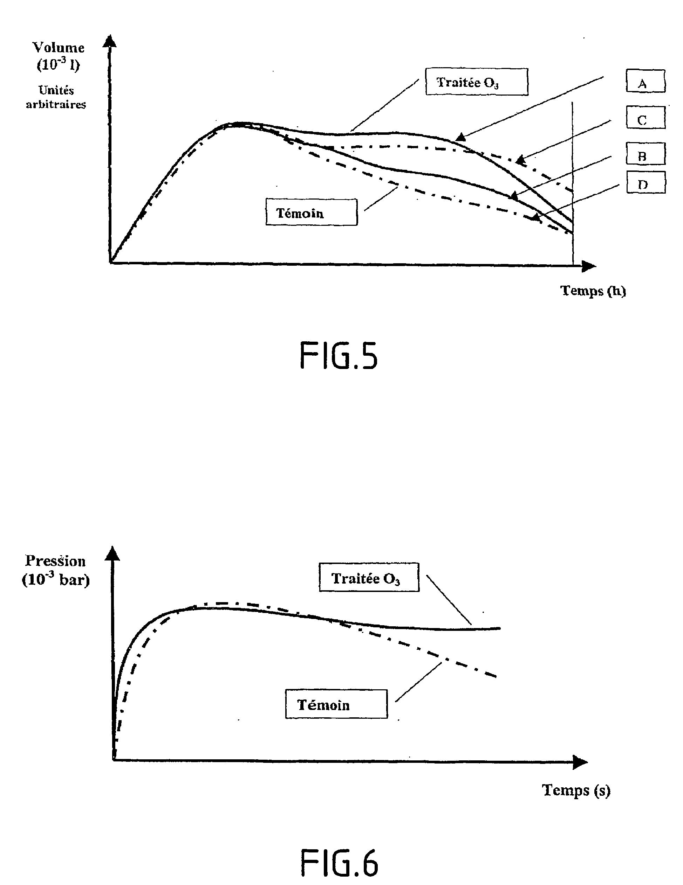

Dans la Figure 5, les quatre courbes correspondent à :
A - Production globale de CO₂ par la pâte, mesurée sur un échantillon traité par l'ozone ;
B - Rétention gazeuse de CO₂ dans la pâte (échantillon traité par l'ozone) ;
C - Production globale de CO₂ par la pâte (échantillon témoin non traité à l'ozone) ; et
D - Rétention gazeuse de CO₂ dans la pâte (échantillon témoin non traité à l'ozone) .

Les axes de coordonnés de ces quatres graphes matérialisent les volumes gazeux produits ou retenus par la pâte, exprimés en 10⁻³ litres (ordonnées), et le temps, limité à la même valeur pour les quatre graphes, exprimé en heures (abscisses).

La comparaison de ces quatre graphes démontre que, pour un temps identique de suivi et de mesure, la pâte traitée par l'ozone libère plus de CO₂ que la pâte non traitée (comparaison des graphes A et C), ce qui démontre bien un meilleur processus d'oxydation induisant une fermentation plus poussée.

La comparaison des graphes B et D démontre une meilleure rétention gazeuse de la pâte traitée par l'ozone, comparée au témoin non traité, et ce pour un même temps d'observation.

La différence entre les courbes de production et de rétention de CO₂ (qui indique le volume de CO₂ libéré) est moindre dans le cas de l'échantillon traité à l'ozone, comparé à l'échantillon non traité.

### Etude à l'aide du consistographe

Le consistographe est l'outil le plus approprié pour mesurer la consistance de la pâte et le temps de mise en pâte, et ce de manière quasi identique aux conditions industrielles. Cet appareil permet de déterminer dans quelle mesure le pétrissage en présence de l'ozone permet d'obtenir une meilleure machinabilité de la pâte (division et façonnage), ainsi qu'une meilleure tolérance de la pâte.

Dans un consistographe, les axes de coordonnées matérialisent les grandeurs mesurées et enregistrées, à savoir, sur l'axe des ordonnées la pression exprimée en 10⁻³ bar, et sur l'axe des abscisses le temps exprimé en secondes. La comparaison de ces deux graphes matérialise la différence de pression exercée par l'échantillon pétri sur les parois du mini-pétrin, ce qui matérialise de façon indirecte le développement de la pâte, sa consistance, et par voie de conséquence, son aptitude ultérieure à la machinabilité.

Les résultats obtenus par la demanderesse sont matérialisés sur les courbes de la Figure 6, dont l'une correspond au témoin non traité par l'ozone durant la phase de mini pétrissage, et l'autre correspond au témoin traité par l'ozone, lors de la phase de mini pétrissage.

L'observation de ces deux graphes démontre que l'échantillon traité par l'ozone lors de son pétrissage monte plus rapidement en pression que l'échantillon non traité et que pour une pression maximum quasi identique, la pression de cet échantillon diminue moins vite que celle de l'échantillon témoin non traité.

Le pétrissage sous atmosphère d'ozone amène donc bien à la pâte ainsi obtenue une propension marquée à une meilleure machinabilité ultérieure de la pâte, et une plus grande tolérance (conservation des qualités en fonction de la durée du pétrissage, au cours des opérations ultérieures de manutention, de transport ou de façonnage).

A titre d'exemple, la demanderesse décrit ci-après un cas d'utilisation relevant de l'invention.

### EXEMPLE

50 kg de farine de blé tendre de type 55 (teneur en eau de 13%, et taux de protéines en référence à la matière sèche (MS) de 11,4%), 1,0 kg de levure et 500 g de sel de mer, ont été introduits dans un pétrin de type REX à cuve fixe (marque VMI), type LEW/GLEW, modifié pour assurer un pétrissage en atmosphère d'ozone. La modification a consisté en l'utilisation d'un couvercle en acier inoxydable permettant le passage étanche du fraser, en assurant avec la cuve une étanchéité périphérique par joint compressible. Le couvercle étanche a été fixé sur la cuve de pétrissage par l'intermédiaire d'une bride circulaire comportant un joint souple d'étanchéité et un dispositif de détrompage permettant le positionnement de ce couvercle par rapport à la cuve de pétrissage. L'ensemble est maintenu en position par l'utilisation de dispositifs mobiles à serrage rapide de type joint autoclave mobile ou « clamps ». Sur le couvercle est disposée une arrivée d'ozone sous forme gazeux, équipée d'une vanne de réglage, une arrivée d'eau ozonée ou hyper-ozonée équipée d'une vanne de réglage ainsi qu'une sortie ou purge de ciel gazeux muni d'une vanne de sectionnement.

1440 mg d'ozone ont été introduits dans le pétrin après dissolution préalable de cette quantité d'ozone dans 30 litres d'eau ozonée, préparée conformément à l'invention (eau de mouillage). Ce premier apport d'ozone introduit avec l'eau de mouillage nécessaire au pétrissage, a permis d'apporter à la pâte 18 mg d'ozone par kg de pâte (masse de pâte dans le pétrin : 80 kg). Après 2 minutes 45 secondes de frasage (phase de pré-pétrissage) à une vitesse de rotation des frasers de 40 tours par minute, le pétrin a été stoppé, et le ciel gazeux rempli de 30 litres d'oxygène préalablement ozoné à une concentration de 80 mg d'O₃ par litre de gaz vecteur. La quantité d'ozone apportée par le gaz vecteur dans le ciel gazeux correspond donc à 2400 mg d'ozone, soit 30 mg d'ozone supplémentaire par kg de pâte (par rapport à la pâte finale mouillée).

Dans ces conditions, la quantité globale d'ozone apportée correspond à : 1440 mg apportée par l'eau + 2400 mg apportée par le gaz vecteur, soit un total 3840 mg d'ozone pour 80 kg de pâte, soit une masse d'ozone de 48 mg par kg de pâte fabriquée.

Dés introduction du volume de gaz dans le ciel gazeux du pétrin, celui-ci a été mis en fonctionnement à une vitesse de pétrissage de 80 tours par minute, pendant 8 minutes. A l'issu de temps de pétrissage, le pétrin a été stoppé et, simultanément, les mesures d'énergie de pétrissage ont été relevées. La consommation d'énergie électrique durant les deux phases de pétrissage telles que définies ci-dessus, et en présence d'ozone a été de 1,2 Kwh.

Des expériences préalablement menées, sur le même pétrin, sur la même farine, dans les mêmes conditions opératoires et sans utilisation d'ozone, l'énergie consommée durant les deux phases de frasage et de pétrissage, ressortaient à 1,5 Kwh.

L'utilisation de l'ozone, lors de la phase de pétrissage, et dans cet exemple spécifique, fait donc apparaître une diminution de l'énergie consommée de l'ordre de 20%, comparée à la technique classique de pétrissage utilisant le même matériel.

A partir de la pâte ainsi obtenue et recueillie, la demanderesse a fait fabriquer, par des professionnels, des pains conformément aux méthodes BIPEA, et a fait observer par les mêmes professionnels les résultats obtenus, desquels il ressort :
- Une qualité identique pour la plupart des paramètres notés ;
- Une meilleure ténacité de la pâte
- Une bonne extensibilité au façonnage
- Un accroissement du volume des pains d'environ 12%

Fort de ces résultats la demanderesse a procédé avec le même matériel et les mêmes méthodes opératoires à la mesure de la diminution possible des vitesses de rotation pour obtenir des résultats similaires.

C'est du dépouillement des résultats de plusieurs expériences telles que celle-ci, que sont tirés les valeurs mentionnées dans la section plus haut consacrée à la réduction de la dépense énergétique.

## Revendications

1. Procédé de pétrissage de pâtes à base de farine de blé tendre en présence de l'ozone **caractérisé en ce que** :
- l'on réalise l'opération de pétrissage en présence de l'ozone et au moyen d'au moins un mobile d'agitation mécanique (« fraser ») ;
- une partie au moins de l'ozone est apportée sous forme dissoute dans l'eau de mouillage ajoutée à la farine ;
- la pression qui règne dans la phase gazeuse du pétrin est comprise entre au moins 1,1 bars absolus et au plus 1,6 bars absolus;
- le rapport entre la quantité d'ozone introduite dans la pâte exprimée en grammes d'ozone par heure divisé par la quantité de pâte produite exprimée en kilogrammes de pâte par heure est compris entre 0.004 et 0.06 ; et
- le temps de pétrissage est d'au moins 2 minutes.

2. Procédé selon la revendication 1, dans lequel l'eau de mouillage contenant de l'ozone est préparée à partir d'un gaz vecteur contenant de l'ozone.

3. Procédé selon la revendication 2, dans lequel le gaz vecteur est l'air, l'oxygène ou un mélange de ces deux gaz.

4. Procédé selon l'une quelconque des revendications 1 à 3, dans lequel on prépare l'eau de mouillage ozonée ou hyper-ozonée par l'intermédiaire de réacteurs de dissolution, de type à bulle, équipés de dispositif poreux, travaillant ou non avec un ciel gazeux sous pression, par l'intermédiaire de dispositifs de dissolution sous pression de type hydro-éjecteur mono ou multi étagés, ou par l'intermédiaire de surpresseurs ou de compresseurs de type sec ou à anneaux liquides.

5. Procédé selon l'une quelconque des revendications 1 à 4, dans lequel la pression de l'eau de mouillage est comprise entre au moins 0,5 bars absolus et au plus 2,2 bars absolus, et de préférence entre au moins 1,7 bars absolus et au plus 1,9 bars absolus.

6. Procédé selon la revendication 1, dans lequel on apporte également de l'ozone dans le ciel gazeux du pétrin.

7. Procédé selon la revendication 6, dans lequel le ciel gazeux du pétrin contenant de l'ozone est préparé à partir d'un gaz vecteur contenant de l'ozone.

8. Procédé selon la revendication 7, dans lequel le gaz vecteur est l'air, l'oxygène ou un mélange de ces deux gaz.

9. Procédé selon l'une quelconque des revendications 1 à 8, dans lequel la pression qui règne dans la phase gazeuse du pétrin est comprise entre au moins 1,3 bars absolus et au plus 1,5 bars absolus.

10. Procédé selon l'une quelconque des revendications 1 à 9, dans lequel on apporte de l'ozone de façon ponctuelle, de façon séquencée, de façon continue, ou par l'utilisation en séquences enchaînées d'ozone apporté par voie liquide ou par voie gazeuse.

11. Procédé selon l'une quelconque des revendications 1 à 10, dans lequel le type de pétrissage utilisé est classique, intensif ou hyper-intensif.

12. Procédé selon l'une quelconque des revendications 1 à 11, dans lequel l'agitation qui permet de mélanger les constituants de la pâte est assurée uniquement au moyen d'au moins un mobile d'agitation mécanique (« fraser ») et à l'exclusion de systèmes de mélange par injection d'eau à haute pression.

13. Pétrin permettant le pétrissage en présence d'ozone comprenant une cuve de pétrissage (2) ou corps de pétrin (25), des frasers (3 ou 26) et un dispositif d'entraînement (6 ou 24), **caractérisé en ce qu'**il comprend également une arrivée d'eau ozonée ou hyper-ozonée (9 ou 31), ladite d'eau ozonée ou hyper-ozonée étant préparée dans au moins un réacteur de dissolution lié à un générateur d'ozone.

14. Pétrin selon la revendication 13, dans lequel l'eau de mouillage ozonée ou hyper-ozonée est préparée par l'intermédiaire de réacteurs de dissolution, de type à bulle, équipés de dispositif poreux, travaillant ou non avec un ciel gazeux sous pression, par l'intermédiaire de dispositifs de dissolution sous pression de type hydro-éjecteur mono ou multi étagés, ou par l'intermédiaire de surpresseurs ou de compresseurs de type sec ou à anneaux liquides.

15. Pétrin selon la revendication 13 ou 14, dans lequel le pétrin est également pourvu d'une arrivée d'ozone gazeux (8 ou 30).

16. Pétrin selon l'une quelconque des revendications 13 à 15, **caractérisé** également en ce qu'il comprend une cuve de pétrissage (2) fermée par un couvercle étanche (5), ledit couvercle (5) contenant un joint compressible (11) permettant le passage étanche du fraser (3), le pétrin étant adapté à un pétrissage dit « classique » avec des vitesses d'agitation comprises entre 40 et 200 tpm, de préférence entre 40 et 80 tpm.

17. Pétrin selon l'une quelconque des revendications 13 à 15, **caractérisé** également en ce qu'il comprend un stockage d'eau (21), un stockage de sel (29), un stockage de farine (22), un stockage de levure (23), ainsi que des dispostifs d'avancement de la pâte (27) et une sortie de pâte (28), le pétrin étant adapté à un pétrissage continu avec des vitesses d'agitation comprises entre 100 et 600 tpm.

## Claims

1. A method for kneading doughs based on soft wheat flour in the presence of ozone **characterized in that**:
- the kneading operation is carried out in the presence of ozone and by means of at least one mobile mechanical stirrer ("fraser");
- at least one portion of the ozone is provided in dissolved form in the wetting water, added to the flour;
- the pressure which prevails in the gas phase of the kneader is comprised between at least 1.1 absolute bars and at most 1.6 absolute bars;
- the ratio between the amount of the ozone introduced into the dough expressed as grams of ozone per hour divided by the amount of produced dough expressed as kilograms of dough per hour is comprised between 0.004 and 0.06; and
- the kneading time is of at least 2 minutes.

2. The method according to claim 1, wherein the wetting water containing ozone is prepared from a carrier gas containing ozone.

3. The method according to claim 2, wherein the carrier gas is air, oxygen or a mixture of both of these gases.

4. The method according to any of claims 1 to 3, wherein the ozonated or hyper-ozonated wetting water is prepared via dissolution reactors of the bubble type, equipped with a porous device, either operating or not with a pressurized gas headspace, via mono- or multi-staged pressurized dissolution devices of the hydro-ejector type, or via superchargers or compressors of the dry or liquid ring type.

5. The method according to any of claims 1 to 4, wherein the pressure of the wetting water is comprised between at least 0.5 absolute bars and at most 2.20 absolute bars, and preferably between at least 1.7 absolute bars and at most 1.9 absolute bars.

6. The method according to claim 1, wherein ozone is also provided in the gas headspace of the kneader.

7. The method according to claim 6, wherein the gas headspace of the kneader containing ozone is prepared from a carrier gas containing ozone.

8. The method according to claim 7, wherein the carrier gas is air, oxygen or a mixture of both of these gases.

9. The method according to any of claims 1 to 8, wherein the pressure which prevails in the gas phase of the kneader is comprised between at least 1.3 absolute bars and at most 1.5 absolute bars.

10. The method according to any of claims 1 to 9, wherein ozone is provided at any time in a sequenced and continuous way or by using linked ozone sequences provided via a liquid route or a gas route.

11. The method according to any of claims 1 to 10, wherein the type of kneading used is standard, intensive or hyper-intensive.

12. The method according to any of claims 1 to 11, wherein the stirring which allows mixing of the constituents of the dough, is exclusively provided by means of a least one mobile mechanical stirrer ("fraser") and excluding mixing systems with injection of high pressure water.

13. A kneader allowing kneading in the presence of ozone comprising a kneading bowl (2) or kneader body (25), frasers (3 or 26) and a driving device (6 or 24), **characterized in that** it also comprises an inlet for ozonated or hyper-ozonated water (9 or 31), said ozonated or hyper-ozonated water being prepared in at least one dissolution reactor attached to an ozone generator.

14. The kneader according to claim 13, wherein the ozonated or hyper-ozonated wetting water is prepared via dissolution reactors of the bubble type, equipped with a porous device, either operating or not with a pressurized gas headspace, via mono- or multi-staged pressurized dissolution devices of the hydro-ejector type, or via superchargers or compressors of the dry type or the liquid ring type.

15. The kneader according to claim 13 or 14, wherein the kneader is also provided with an inlet for ozone gas (8 or 30).

16. The kneader according to any of claims 13 to 15, also **characterized in that** it comprises a kneading bowl (2) closed by a sealed lid (5), said lid (5) containing a compressor seal (11) allowing the sealed passage of the fraser (3), the kneader being suitable for so-called "standard" kneading with stirring rates comprised between 40 and 200 rpm, preferably between 40 and 80 rpm.

17. The kneader according to any of claims 13 to 15, also **characterized in that** it comprises a water storage (21), a salt storage (29), a flour storage (22), a yeast storage (23), as well as devices for moving the dough (27) forwards and a dough outlet (28), the kneader being suitable for continuous kneading with stirring rates comprised between 100 and 600 rpm.

## Patentansprüche

1. Verfahren zum Kneten von Teigen auf der Basis von Weichweizenmehl in Anwesenheit von Ozon, **dadurch gekennzeichnet, daß**:
- der Knetvorgang in Anwesenheit von Ozon und mittels wenigstens eines mechanischen Rührwerks ("Fraser") durchgeführt wird,
- wenigstens ein Teil des Ozons in gelöster Form in dem dem Mehl zugegebenen Befeuchtungswasser zugeführt wird,
- der Druck, der in der Gasphase der Knetmaschine herrscht, zwischen wenigstens 1,1 bar absolut und höchstens 1,6 bar absolut liegt,
- das Verhältnis zwischen der in den Teig eingebrachten Ozonmenge, ausgedrückt in Gramm Ozon pro Stunde, und der hergestellten Teigmenge, ausgedrückt in Kilogramm Teig pro Stunde, zwischen 0,004 und 0,06 liegt, und
- die Knetzeit wenigstens 2 Minuten beträgt.

2. Verfahren nach Anspruch 1, wobei das ozonhaltige Befeuchtungswasser mittels eines ozonhaltigen Trägergases hergestellt wird.

3. Verfahren nach Anspruch 2, wobei das Trägergas Luft, Sauerstoff oder ein Gemisch aus diesen beiden Gasen ist.

4. Verfahren nach einem der Ansprüche 1 bis 3, wobei das ozonisierte oder hyper-ozonisierte Befeuchtungswasser mit Hilfe von mit porösen Vorrichtungen ausgestatteten Lösereaktoren, vom Typ Blasenreaktor, die mit einem unter Druck stehenden Gasvolumen arbeiten oder auch nicht, mit Hilfe von Vorrichtungen zum Auflösen unter Druck vom Typ ein- oder mehrstufiger Hydroejektor oder mit Hilfe von Druckpumpen oder Verdichtern trockener Art oder mit Flüssigkeitsring hergestellt wird.

5. Verfahren nach einem der Ansprüche 1 bis 4, wobei der Druck des Befeuchtungswassers zwischen wenigstens 0,5 bar absolut und höchstens 2,2 bar absolut und vorzugsweise zwischen wenigstens 1,7 bar absolut und höchstens 1,9 bar absolut liegt.

6. Verfahren nach Anspruch 1, wobei Ozon auch in dem Gasvolumen der Knetmaschine zugeführt wird.

7. Verfahren nach Anspruch 6, wobei das ozonhaltige Gasvolumen der Knetmaschine mittels eines ozonhaltigen Trägergases erzeugt wird.

8. Verfahren nach Anspruch 7, wobei das Trägergas Luft, Sauerstoff oder ein Gemisch aus diesen beiden Gasen ist.

9. Verfahren nach einem der Ansprüche 1 bis 8, wobei der Druck, welcher in der Gasphase der Knetmaschine herrscht, zwischen wenigstens 1,3 bar absolut und höchstens 1,5 bar absolut liegt.

10. Verfahren nach einem der Ansprüche 1 bis 9, wobei Ozon punktuell, sequenziert, kontinuierlich oder durch Verwendung in aufeinanderfolgenden Sequenzen von auf flüssigem oder gasförmigem Weg zugeführten Ozon eingebracht wird.

11. Verfahren nach einem der Ansprüche 1 bis 10, wobei die Art des verwendeten Knetens herkömmlich, intensiv oder hyperintensiv ist.

12. Verfahren nach einem der Ansprüche 1 bis 11, wobei das Rühren, das ermöglicht, die Bestandteile des Teigs zu vermischen, einzig und allein mittels wenigstens eines mechanischen Rührwerks ("Fraser") und unter Ausschluß von Mischsystemen durch Einspritzen von Wasser unter Hochdruck sichergestellt wird.

13. Knetmaschine, die das Kneten in Anwesenheit von Ozon ermöglicht, mit einem Knettrog (2) oder Knetmaschinenkörper (25), Frasern (3 oder 26) und einer Antriebsvorrichtung (6 oder 24), **dadurch gekennzeichnet, daß** sie auch einen Zulauf für ozonisiertes oder hyper-ozonisiertes Wasser (9 oder 31) aufweist, wobei das ozonisierte oder hyper-ozonisierte Wasser in wenigstens einem mit einem Ozongenerator verbundenen Lösereaktor hergestellt wird.

14. Knetmaschine nach Anspruch 13, bei der das ozonisierte oder hyper-ozonisierte Befeuchtungswasser mit Hilfe von mit porösen Vorrichtungen ausgestatteten Lösereaktoren, vom Typ Blasenreaktor, die mit einem unter Druck stehenden Gasvolumen arbeiten oder auch nicht, mit Hilfe von Vorrichtungen zum Auflösen unter Druck vom Typ ein- oder mehrstufiger Hydroejektor oder mit Hilfe von Druckpumpen oder Verdichtern trockener Art oder mit Flüssigkeitsring hergestellt wird.

15. Knetmaschine nach Anspruch 13 oder 14, wobei die Knetmaschine auch mit einem Zulauf für gasförmiges Ozon (8 oder 30) versehen ist.

16. Knetmaschine nach einem der Ansprüche 13 bis 15, auch **dadurch gekennzeichnet, daß** sie einen Knettrog (2) umfaßt, der durch einen dichten Deckel (5) verschlossen ist, wobei der Deckel (5) eine zusammendrückbare Dichtung (11) enthält, die das dichte Durchgreifen des Frasers (3) ermöglicht, wobei die Knetmaschine für ein sogenanntes "herkömmliches" Kneten mit Rührgeschwindigkeiten zwischen 40 und 200 U/Min., vorzugsweise zwischen 40 und 80 U/Min. ausgelegt ist.

17. Knetmaschine nach einem der Ansprüche 13 bis 15, **dadurch gekennzeichnet, daß** sie einen Wasserspeicher (21), einen Salzspeicher (29), einen Mehlspeicher (22), einen Hefespeicher (23) sowie Vorrichtungen zum Vorwärtsbewegen des Teigs (27) und einen Teigauslaß (28) umfaßt, wobei die Knetmaschine für ein kontinuierliches Kneten mit Rührgeschwindigkeiten zwischen 100 und 600 U/Min. ausgelegt ist.
